Europäisches Patentamt

European Patent Office

Office européen des brevets

(19)

(11) Numéro de publication : **0 646 635 A1**

(12) # DEMANDE DE BREVET EUROPEEN

(21) Numéro de dépôt : **94402166.6**

(22) Date de dépôt : **29.09.94**

(51) Int. Cl.$^6$ : **C09K 5/04,** C09K 5/00, C04B 35/52

(30) Priorité : **30.09.93 FR 9311666**

(43) Date de publication de la demande :
**05.04.95 Bulletin 95/14**

(84) Etats contractants désignés :
**AT BE CH DE DK ES FR GB GR IE IT LI LU NL PT SE**

(71) Demandeur : **ELF AQUITAINE**
**Tour Elf,**
**2, Place de la Coupole,**
**La Défense 6**
**F-92400 Courbevoie (FR)**

(72) Inventeur : **Prosdocimi, Jacques**
**12 rue des Micocouliers**
**F-66680 Canohes (FR)**
Inventeur : **Spinner, Bernard**
**23 avenue Joffre**
**F-66200 Corneilla del Vercol (FR)**

(74) Mandataire : **Timoney, Ian Charles Craig et al**
**SOCIETE NATIONALE ELF AQUITAINE**
**(PRODUCTION),**
**Tour Elf,**
**Cédex 45**
**F-92078 Paris La Défense (FR)**

(54) **Procédé de réalisation d'un composite actif.**

(57) Procédé de réalisation d'un composite actif constitué d'un support et d'un agent actif, le support comprenant un composé lamellaire exfolié, le procédé comportant les étapes de :
— imprégnation du support par l'agent actif, et
— mélange du support imprégné avec du graphite expansé ayant une densité comprise entre 0,001 et 0,02.
Un composite actif préparé selon ce procédé est également décrit.

FIG.1

EP 0 646 635 A1

La présente invention se rapporte à un procédé de réalisation d'un composite actif constitué d'un support et d'un agent actif. Le support est poreux et chimiquement inerte, de façon à permettre des interactions entre l'agent actif, dispersé dans le support, et un flux gazeux ou liquide. La présente invention se rapporte également à un tel composite actif.

Ce composite actif est conçu pour être utilisé exclusivement dans des pompes à chaleur chimiques.

Dans le domaine des pompes à chaleurs chimiques fondées sur la thermicité de la réaction entre un solide et un gaz, ou de l'adsorption d'un gaz sur un solide, on utilise un mélange d'un matériau divisé, tel que le graphite expansé, et d'un réactif solide, par exemple un sel, ou respectivement d'un adsorbant comme une zéolithe. Le mélange de graphite expansé et de ce solide, siège d'une réaction chimique ou d'une adsorption physique, présente de nombreux avantages lors d'une réaction chimique ou d'une adsorption physique entre le solide et un gaz. Le graphite expansé se présentant sous forme de feuillets a une très grande surface spécifique et permet la diffusion du gaz même en milieu confiné. De plus, la conductibilité thermique du mélange est importante.

Dans le document WO 91/15292, il a été proposé de réaliser un composite actif en préparant un support formé d'un bloc de graphite expansé recomprimé qui est ensuite imprégné de l'extérieur, par exemple, par une solution d'un sel, le support imprégné étant ensuite séché pour réaliser le composite actif. Le composite actif ainsi réalisé a une conductibilité thermique nettement supérieure à celle du graphite expansé en feuillets, tout en gardant une porosité importante aux flux gazeux.

Malgré des avantages indéniables, le composite actif préparé selon le procédé décrit dans le document WO 91/15292 ne donne pas entièrement satisfaction. En effet, quand on utilise le composite actif pour contenir un sel et constituer le siège d'une réaction chimique avec un gaz, l'absorption du gaz dans le sel provoque une expansion de volume des cristaux de sel, entraînant une déformation des feuillets de graphite autour des cristaux. De plus, lors d'une désorption du gaz, les cristaux de sel se contractent. L'attraction physique entre les cristaux et les feuillets de graphite provoque une déformation de ces feuillets lors de la contraction des cristaux.

Ce type de composite actif trouve une utilisation dans des systèmes thermochimiques dans lesquels un bloc du composite est disposé dans une enceinte métallique, la paroi externe du bloc étant en contact intime avec la paroi interne de l'enceinte. En phase de désorption du gaz, la contraction des cristaux, et la déformation des feuillets entraînent une contraction générale du bloc avec comme conséquence que la paroi du bloc se détache de l'intérieur de l'enceinte. Ceci réduit de façon importante le coefficient de transfert de chaleur entre le bloc et l'enceinte.

Le document FR-A-2626496 décrit un procédé d'amélioration des caractéristiques d'absorption et de désorption d'un gaz par un milieu réactionnel dans lequel on mélange le milieu réactionnel, constitué d'un sel, avec du graphite expansé et un deuxième produit expansé de structure rigide et de forte pénétrabilité. Ce deuxième produit comprend un minéral lamellaire hydraté exfolié, par exemple de la vermiculite ou de la perlite.

Le mélange décrit dans le document FR-A-2624696 est en forme de poudre de faible densité, et contient le sel sous forme pulvérulente. Il n'est pas envisagé dans ce document de recomprimer le mélange pulvérulent afin de former un bloc de réactif tel que celui décrit dans le document WO 91/15292. Toutefois, si l'on cherchait à former un tel bloc à partir du mélange pulvérulent du document FR-A-2626496, ce bloc subirait les inconvénients décrits précédemment, car les particules de sel dans ce mélange se trouvant dispersées à la fois entre les feuillets de graphite expansé et entre les lamelles de vermiculite, provoqueraient la même déformation de la structure lors des adsorption et désorption du gaz.

La présente invention a pour objet un composite actif qui est capable d'amortir les changements de volume de l'agent actif qu'il contient.

Pour ce faire, l'invention propose un procédé de réalisation d'un composite actif constitué d'un support et d'un agent actif, le support comprenant un composé lamellaire exfolié, le procédé comportant les étapes de :
- imprégnation du support par l'agent actif ; et
- mélange du support imprégné avec du graphite expansé ayant une densité comprise entre 0,001 et 0,02.

De préférence, l'étape d'imprégnation de l'agent actif dans le support comprend les étapes de :
- préparation d'une solution de l'agent actif ;
- immersion du support dans la solution ; et
- séchage du support imprégné.

L'invention propose, de plus, un composite actif comprenant un support formé d'un composé lamellaire expansé, un agent actif et du graphite expansé, caractérisé en ce qu'il comprend :
- 10 à 80 % en poids d'agent actif,
- 2 à 20 % en poids de matériau expansé lamellaire, et
- 10 à 90 % en poids de graphite expansé, le total des composants étant égal à 100 %.

Selon l'invention, l'imprégnation du minéral lamellaire avec un sel, ainsi que la structure élastique du minéral, lui permettent d'absorber ou d'amortir les changements de volume du sel.

On entend par "composé lamellaire exfolié" des produits obtenus à partir de minéraux lamellaires hydratés exfoliés. Ces produits peuvent être notamment de la vermiculite, de la perlite ou des produits obtenus par exfoliation, en particulier à partir d'oxydes type $SiO_2$, $Al_2O_3$ (argiles). Le groupe des kandites (épaisseur de feuillet de 7 A°) et des illites (épaisseur de feuillet de 10 A°) est moins intéressant que les smectites et que le groupe de la vermiculite (épaisseur des feuillets de 14,5 à 15 A°). Seules les vermiculites ont la propriété de s'expanser de manière aussi considérable.

De préférence, le composé lamellaire exfolié comprend de la vermiculite, un silicate d'aluminium et de magnésium hydraté.

D'autres caractéristiques et avantages de la présente invention apparaîtront plus clairement à la lecture de la description ci-après, faite en référence aux dessins annexés dans lesquels :
- la figure 1 représente des courbes du temps d'avancement en fonction du temps d'une absorption de gaz utilisant comme siège de réaction le produit selon l'invention ; et
- la figure 2 est une courbe de décomposition en fonction du temps, analogue à la figure 1.

Selon un premier aspect de l'invention, un procédé, pour réaliser un composite actif, dans lequel le support comprend de la vermiculite et l'agent actif renferme un sel, s'effectue comme suit :

On prépare une solution saturée du sel à utiliser et l'on immerge la vermiculite à imprégner dans cette solution. Du fait de sa structure poreuse, la vermiculite s'imprègne rapidement et totalement de la solution. La vermiculite imprégnée est ensuite séchée laissant les feuillets complètement enrobés de macrocristaux de sel.

Le composite actif ainsi réalisé peut être utilisé soit seul, soit, dans un mode de réalisation préféré, en combinaison avec un autre liant, par exemple du graphite expansé. Les particules de vermiculite imprégnée sont mélangées avec du graphite expansé de densité comprise entre 0,001 et 0,02. Le mélange résultant est ensuite recomprimé afin de former un bloc consolidé de densité comprise entre 0,04 et 1,5.

**Exemple I :**

Un support imprégné est préparé constitué de 19,2 % en poids de vermiculite et 80,8 % en poids de $MnCl_2$. Ce support imprégné est formé de particules ayant une granulométrie comprise entre 1 mm et 5 mm, mélangé avec du graphite expansé ayant une densité de 0,01 à 0,012 de façon que le graphite constitue 38 % en poids du mélange. Le mélange est ensuite recomprimé afin de former un bloc consolidé de composite actif ayant une densité de 0,444.

Le composite actif ainsi réalisé est utilisé, dans une pompe à chaleur chimique, pour faire des essais comparatifs avec un réactif solide témoin formé uniquement de graphite expansé recomprimé et d'un sel. Le réactif solide témoin utilisé dans les essais comparatifs comprend un bloc de graphite de 0,2 kg/l qui contient 54 % de masse de $MnCl_2$ anhydre, soit 46 % de graphite en masse.

Ces deux préparations sont voisines par leurs caractéristiques en proportions massiques de sel actif (49,5 % et 54 %, soit une variation en masse de 4,5 %) et en masse volumique de graphite (0,173 et 0,2) fournissant des conductivités radiales du même ordre de grandeur. La comparaison des performances est donc possible.

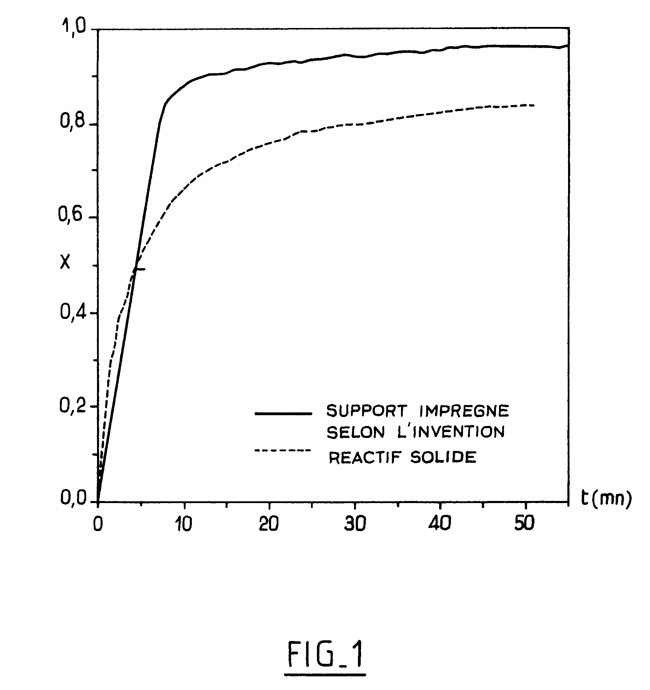

La figure 1 concerne les cinétiques expérimentales en synthèse de l'ammoniacate $MnCl_2$ $6NH_3$ à partir de $MnCl_2$ $2NH_3$ (après 2 cycles de synthèse/décomposition 0/6 $NH_3$ et 6/2 $NH_3$) pour le support imprégné selon l'invention par rapport au réactif solide témoin.

Jusqu'au temps t = 5 mn, les vitesses sont comparables. Au-delà de ce temps, la réaction s'effectue plus rapidement et plus complètement dans le support imprégné selon l'invention.

Les transferts de masse et de chaleur sont meilleurs dans le composite actif selon l'invention, lui permettant d'atteindre 90 % de la réaction totale avec l'ammoniac en 13 minutes, le réactif solide témoin n'atteignant pas ce niveau de réaction de $MnCl_2$ $2NH_3$ en $MnCl_2$ $6NH_3$.

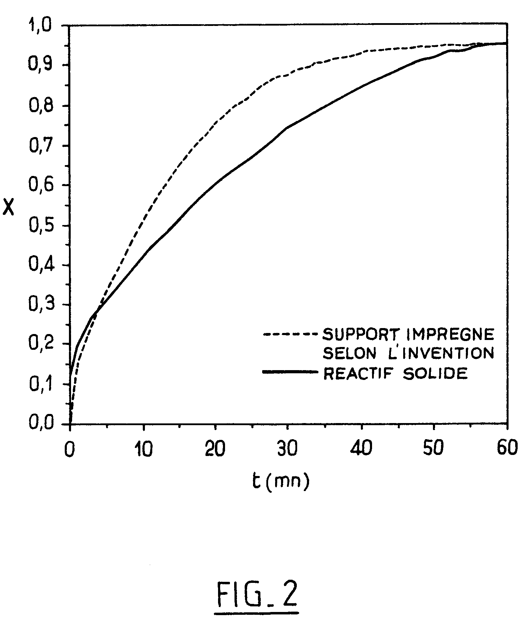

La figure 2 représente la décomposition pour les deux réactifs. Comme sur la courbe de la figure 1, les deux décompositions s'effectuent de façon analogue jusqu'au temps t = 5 minutes. Au-delà de ce temps, la décomposition s'effectue plus rapidement dans le support imprégné que dans le réactif solide témoin. Les transferts de masse et de chaleur étant meilleurs dans le composite actif selon l'invention, la décomposition de celui-ci atteint 90 % en 35 minutes, tandis qu'il faut 50 minutes pour que le réactif solide témoin atteigne ce niveau.

Des essais additionnels ont montré une excellente reproductibilité des vitesses de synthèse et de décomposition des deux réactifs.

Le procédé selon l'invention peut être utilisé avec de nombreux agents actifs différents tels que ceux proposés par exemple dans le Tableau I. Par agent actif, on entend par exemple un solide réactif un solide adsorbant ou un liquide absorbant.

3

TABLEAU I

| Nature de l'interaction agent actif-gaz | Agents actifs | Gaz |
|---|---|---|
| Réactions solide-gaz (renversables) | halogénures pseudohalogénures carbonates sulfates nitrates | eau $NH_3$ et dérivés (amines) |
| | oxydes | $CO_2$ $SO_2$ $SO_3$ |
| | métaux alliages métalliques | $O_2$ $H_2$ hydrocarbures |
| | hydrures métalliques | $H_2$ |
| Absorption liquide - gaz (renversable) et absorption liquide saturé-gaz (renversable) | solutions aqueuses halogénures pseudo halogénures carbonates sulfates nitrates | eau |
| | solutions dans $NH_3$ liq. halogénures pseudohalogénures carbonates sulfates nitrates | $NH_3$ et dérivés |

| Adsorption solide-gaz (renversable) | zéolithe charbon actif silicagel oxyde phosphorique | eau méthanol et dérivés |
|---|---|---|

Dans le cas des chlorures, le tableau II précise la nature de liquides d'imprégnation solubilisant l'agent actif ou le mettant en suspension.

TABLEAU II

| Agent actif | Liquide d'imprégnation | | |
|---|---|---|---|
| | de solubilisation | de suspension | |
| $CaCl_2$ | eau ou alcool, acétone | | |
| $MnCl_2$ | alcool | éther, $NH_3$ | liquide |
| $BaCl_2$ | alcool | | |
| $NiCl_2$ | alcool, $NH_4OH$ | $NH_3$ | liquide |
| $CuCl_2$ | acétone | | |
| $CoCl_2$ | alcool, acétone éther | | |
| $SrCl_2$ | alcool, acétone | $NH_3$ | liquide |
| $NaCl_2$ | glycérine | | |
| $FeCl_2$ | alcool, acétone | éther | |
| $NH_4Cl$ | alcool, $NH_3$ liquide | acétone, éther | |
| $CdCl_2$ | alcool | acétone, éther | |

**Exemple II :**

On prépare un support imprégné constitué de 4% en poids de vermiculite et 96 % en poids de MnCl2. Ce support imprégné formé de particules ayant une granulométrie comprise entre 1 mm et 5 mm, est mélangé avec du graphite expansé ayant une densité de 0,01 à 0,012 de façon que le graphite constitue 25 % en poids du mélange. Le mélange est ensuite recomprimé afin de former un composite actif ayant une densité de 1,5 qui est utilisé, dans une pompe à chaleur chimique, pour faire des essais comparatifs avec un réactif solide témoin formé uniquement de graphite expansé recomprimé et d'un sel.

Le réactif solide témoin comprend un bloc de graphite de 0,2 kg/l qui contient 72 % en poids de $MnCl_2$ anhydre, soit 28 % de graphite en poids.

Comme pour les essais comparatifs de l'Exemple I, les essais selon l'Exemple II ont démontré que les vitesses de réaction et de décomposition pour le composite actif selon l'invention étaient supérieures à celles obtenues pour le réactif solide témoin, ce qui est illustré par des courbes analogues à celle de l'Exemple I.

On peut préparer des composites actifs selon l'invention comprenant en poids
- de 10 à 80 % d'agent actif,
- de 2 à 20 % de composé expansé lamellaire, et

- de 10 à 90 % de graphite expansé, le total des composants étant égal à 100 %.

La réalisation d'un composite actif à partir d'un composé lamellaire exfolié telle que décrite ci-dessus a pour résultat de permettre au composite d'absorber les changements de volume du sel qui se produisent lors des réactions chimiques avec un gaz. Un bloc du composite actif ne subit plus de dégradations telles que celles qui se présentaient dans les blocs de réactifs connus. Le contact entre un bloc de composite actif selon l'invention et la paroi d'une chambre de réacteur, dans laquelle le bloc est emmanché à force, reste intime même après une série importante de réactions. Le transfert de chaleur entre le bloc et la paroi est, donc, maintenu à un niveau important.

**Revendications**

**1 -** Procédé de réalisation d'un composite actif constitué d'un support et d'un agent actif, le support comprenant un composé lamellaire exfolié tel que défini, le procédé comportant les étapes de :
- imprégnation uniquement du support par l'agent actif ; et
- mélange du support imprégné avec du graphite expansé non-imprégné ayant une densité comprise entre 0,001 et 0,02.

**2 -** Procédé selon la revendication 1 caractérisé en ce qu'il comporte l'étape additionnelle de recompression du mélange de support imprégné et de graphite expansé.

**3 -** Procédé selon la revendication 1 ou 2 caractérisé en ce que l'étape d'imprégnation de l'agent actif dans le support comprend les étapes de :
- préparation d'une solution de l'agent actif ;
- immersion du support dans la solution ; et
- séchage du support imprégné.

**4 -** Composite actif comprenant un support formé d'un composé lamellaire expansé, un agent actif et du graphite expansé, caractérisé en ce qu'il comprend en poids :
- 10 à 80 % d'agent actif ;
- 2 à 20 % de composé expansé lamellaire ;
- 10 à 90 % de graphite expansé, le total des composants étant égal à 100 %.

**5 -** Composite actif selon la revendication 4 caractérisé en ce qu'il a une densité de 0,04 à 0,24.

**6 -** Composite actif selon la revendication 4 caractérisé en ce qu'il a une densité de 0,08 à 1,5.

**7 -** Composite actif selon la revendication 4 caractérisé en ce que sa conductivité radiale est supérieure à 5 W/mK.

FIG_1

FIG. 2

EP 0 646 635 A1

| | Office européen des brevets | RAPPORT DE RECHERCHE EUROPEENNE | Numero de la demande EP 94 40 2166 |
|---|---|---|---|

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | WO-A-91 15292 (SOCIETE NATIONALE ELF AQUITAINE) * revendications 1,2,6 * * page 1, ligne 13 - ligne 25; tableau 1 * | 1-4 | C09K5/04 C09K5/00 C04B35/52 |
| X | EP-A-0 307 296 (SOCIETE NATIONALE ELF AQUITAINE) * page 2, ligne 30 - ligne 43; revendications 1,8 * * abrégé * | 1-4 | |
| X | WO-A-89 07009 (SOCIETE NATIONALE ELF AQUITAINE) * abrégé; revendications 1-3,12 * | 1-4 | |
| Y | FR-A-2 546 278 (COMMISSARIAT A L'ENERGIE ATOMIQUE) * abrégé; revendications 1,2,4 * | 1-7 | |
| Y | FR-A-2 553 183 (TEISSIER) * le document en entier * * revendications 1,2 * | 1-7 | DOMAINES TECHNIQUES RECHERCHES (Int.Cl.6) C09K C04B |

Le présent rapport a été établi pour toutes les revendications

| Lieu de la recherche LA HAYE | Date d'achèvement de la recherche 14 Février 1995 | Examinateur Nicolas, H |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

9